# EUROPEAN PATENT APPLICATION

(11) **EP 4 340 482 A1**
(43) Date of publication of application: **20.03.2024**
(21) Application number: 21941202.0
(22) Date of filing: 10.05.2021
(51) Int. Cl.: H04W 72/04

(54) **METHOD FOR TRANSMITTING SYSTEM MESSAGE, APPARATUS, AND COMMUNICATION DEVICE**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2021/092877
(87) International publication number: WO 2022/236626

(57) **Abstract**

The present disclosure relates to the field of wireless communication technology, and provided therein are a method for transmitting a system message, an apparatus, and a communication device. The method comprises: receiving an indication message by means of a light UE, the indication message being used for indicating monitoring behavior of the light UE; and determining a system message to monitor according to the indication message. Consequently, the light UE determines the system message to monitor on the basis of the received indication message, thereby facilitating an improvement of the monitoring efficiency of the light UE.

## Description

### TECHNICAL FIELD

The disclosure relates to the field of wireless communication technologies, and more particularly, to a method and an apparatus for transmitting or receiving a system message, and a communication device.

### BACKGROUND

Two technologies, machine type communication (MTC) and narrow band internet of things (NB-IoT), may be proposed in a long-term-evolution fourth-generation mobile communication technology (4G) system to support IoT services. These two technologies may aim to low rate and high delay scenarios and the like scenarios, such as meter reading, environmental monitoring. At present, NB-IoT may only support a maximum rate of several hundred Kbps and MTC may only support a maximum rate of several Mbps.

With the continuous development of the IoT services and with the popularity of services such as video surveillance, smart home, wearable devices, and industrial sensor monitoring, these services usually require a rate of tens to hundreds of megabytes and a relatively high delay. Therefore, it is difficult to satisfy these requirements for MTC and NB-IoT technologies in the LTE. Based on this situation, it is proposed to design a new user equipment (UE) in a fifth-generation mobile communication technology (5G) new radio (NR) to cover equipments of these mid-end IoT devices. This new type of terminal is called a reduced capability UE or a NR-lite for short in the third generation partnership project (3GPP) standardization.

Similar to IoT devices in the LTE, based on the 5G NR-lite, it usually needs to satisfy requirements of low cost, low complexity, a certain degree of coverage enhancement, and power saving. However, the current NR is designed for high-end terminals such as high rate and low delay, so the current NR technology may not satisfy the above requirements of the NR-lite.

### SUMMARY

According to a first aspect of embodiments of the disclosure, a method for transmitting or receiving a system message is provided. The method is applicable to a reduced capability user equipment (redcap UE). The method includes: receiving an indication message, in which the indication message is configured to indicate a monitoring behavior of the redcap UE; and determining a system message to be monitored according to the indication message.

Optionally, the indication message is configured to indicate the redcap UE to monitor a first system message or not to monitor a second system message, in which the first system message corresponds to the redcap UE and the second system message corresponds to a system message defined in an existing system.

Optionally, the indication message is configured to indicate the redcap UE to monitor a first system message or not to monitor a second system message, in which the first system message corresponds to the redcap UE and the second system message corresponds to a system message defined in an existing system.

Optionally, determining the system message to be monitored according to the indication message includes: monitoring the first system message or not monitoring the second system message in response to the indication message in a first state; or monitoring the second system message in response to the indication message in a second state.

Optionally, the indication message includes a master information block (MIB) and the MIB is configured to indicate the monitoring behavior of the redcap UE.

Optionally, the indication message includes a physical downlink control channel (PDCCH), in which the PDCCH is configured for the second system message and the PDCCH is configured to indicate the monitoring behavior of the redcap UE.

Optionally, the indication message includes a physical downlink shared channel (PDSCH), in which the PDSCH is configured for the second system message and the PDSCH is configured to indicate the monitoring behavior of the redcap UE.

Optionally, when monitoring the first system message, the method further includes: determining a transmission parameter of the first system message.

Optionally, the transmission parameter includes at least one of: a parameter of a bandwidth part (BWP) where the first system message is located; a set parameter of a control resource set (CORESET) for scheduling the first system message; or a set parameter of a PDSCH for scheduling the first system message.

Optionally, determining the transmission parameter of the first system message includes: at least some of the following transmission parameters of the first system message being the same as corresponding transmission parameters of the second system message: a bandwidth; a sub-carrier spacing (SCS); or a modulation and coding scheme (MCS).

Optionally, determining the transmission parameter of the first system message includes: determining the transmission parameter according to a PDCCH and/or a PDSCH, in which the PDCCH and/or the PDSCH includes a specific configuration of the transmission parameter.

Optionally, the PDCCH is a PDCCH shared by the redcap UE and a non-redcap UE or a PDCCH dedicated to the redcap UE.

According to a second aspect of embodiments of the disclosure, another method for transmitting or receiving a system message is provided. The method is applicable to a base station. The method includes: transmitting an indication message, in which the indication message is configured to indicate a monitoring behavior of a redcap UE, so that the redcap UE determines a system information to be monitored according to the indication message.

Optionally, the indication message is configured to indicate the redcap UE to monitor a first system message or not to monitor a second system message, in which the first system message corresponds to the redcap UE and the second system message corresponds to a system message defined in an existing system.

According to a third aspect of embodiments of the disclosure, an apparatus for transmitting or receiving a system message is provided. The apparatus is applicable to a redcap UE. The apparatus includes a receiving module and a determining module.

The receiving module is configured to receive an indication message, in which the indication message is configured to indicate a monitoring behavior of the redcap UE.

The determining module is configured to determine a system message to be monitored according to the indication message.

According to a fourth aspect of embodiments of the disclosure, another apparatus for transmitting or receiving a system message is provided. The apparatus is applicable to a base station. The apparatus includes a transmitting module.

The transmitting module is configured to transmit an indication message, in which the indication message is configured to indicate a monitoring behavior of a redcap UE, so that the redcap UE determines a system information to be monitored according to the indication message.

According to a fifth aspect of embodiments of the disclosure, a communication device is provided. The communication device includes: a transceiver; a memory; and a processor, connected to the transceiver and the memory respectively and configured to, by executing computer-executable instructions on the memory, control wireless signal transceiving of the transceiver and realize the method for transmitting or receiving a system message provided in the embodiments of the first aspect of the disclosure or the method for transmitting or receiving a system message provided in the embodiments of the second aspect of the disclosure.

According to a sixth aspect of embodiments of the disclosure, a computer storage medium is provided. The computer storage medium stores computer-executable instructions; and when the computer-executable instructions are executed by a processor, the method for transmitting or receiving a system message provided in the embodiments of the first aspect of the disclosure or the method for transmitting or receiving a system message provided in the embodiments of the second aspect of the disclosure may be realized.

According to a seventh aspect of embodiments of the disclosure, a computer program product is provided. The computer program product includes a computer program. When the computer program is executed by a processor, the method for transmitting or receiving a system message provided in the embodiments of the first aspect of the disclosure or the method for transmitting or receiving a system message provided in the embodiments of the second aspect of the disclosure may be realized.

In the method and the apparatus for transmitting or receiving a system message, and the communication device, provided in the embodiments of the disclosure, the redcap UE receives the indication message. The indication message is configured to indicate the monitoring behavior of the redcap UE. The system message to be monitored is determined according to the indication message. Thus, the redcap UE determines the system information to be monitored according to the received indication message, which provides a new method for monitoring a system message, thereby improving the monitoring efficiency of the redcap UE.

Additional aspects and advantages of the disclosure will be set forth in part in the description which follows, and in part will be obvious from the description or may be learned by practice of the disclosure.

### BRIEF DESCRIPTION OF THE DRAWINGS

The above and/or additional aspects and advantages of the disclosure will become apparent and understandable from the following description of the embodiments in conjunction with the accompanying drawings, in which:
FIG. 1 is a schematic flowchart of a method for transmitting or receiving a system message according to some embodiments of the disclosure.
FIG. 2 is a schematic flowchart of another method for transmitting or receiving a system message according to some embodiments of the disclosure.
FIG. 3 is a schematic flowchart of another method for transmitting or receiving a system message according to some embodiments of the disclosure.
FIG. 4 is a schematic flowchart of another method for transmitting or receiving a system message according to some embodiments of the disclosure.
FIG. 5 is a schematic block diagram of an apparatus for transmitting or receiving a system message according to some embodiments of the disclosure.
FIG. 6 is a schematic block diagram of another apparatus for transmitting or receiving a system message according to some embodiments of the disclosure.
FIG. 7 is a block diagram of a user equipment according to some embodiments of the disclosure.
FIG. 8 is a block diagram of a network side device according to some embodiments of the disclosure.

### DETAILED DESCRIPTION

Reference will now be made in detail to some embodiments of the disclosure, examples of which are illustrated in the accompanying drawings. The following description refers to the accompanying drawings in which the same numbers in different drawings represent the same or similar elements unless otherwise represented. The implementations set forth in the following description of some embodiments do not represent all implementations consistent with embodiments of the disclosure. Instead, they are merely examples of apparatuses and methods consistent with aspects related to embodiments of the disclosure as recited in the appended claims.

The terms used in embodiments of the disclosure are only for the purpose of describing specific embodiments and are not intended to limit embodiments of the disclosure. The singular forms of "a" and "the" used in embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second, and third may be used in embodiments of the disclosure to describe various information, the information should not be limited to these terms. These terms are only used to distinguish the same type of information from each other. For example, without departing from the scope of embodiments of the disclosure, the first information may also be referred to as the second information, and similarly, the second information may also be referred to as the first information. Depending on the context, the word "if' as used herein can be interpreted as "when", "while" or "in response to determining".

The embodiments of the disclosure are described in detail below. Examples of the embodiments are illustrated in the accompanying drawings where the same or similar numbers throughout indicate the same or similar elements. The embodiments described below by reference to the accompanying drawings are illustrative and are intended to interpret the disclosure and are not to be construed as a limitation of the disclosure.

Since the current new radio (NR) is designed for high-end terminals such as high rate and low delay, the current design may not satisfy requirements of low rate and high delay for the NR-lite. Therefore, it may modify the current NR system to satisfy the requirements of the NR-lite. For example, in order to satisfy the requirements of low cost and low complexity, a radio frequency (RF) bandwidth of the NR-IoT may be limited such as it is limited to 5MHz or 10MHz or a buffer size of the NR-lite may be limited and a size of each receiving transfer block may be further limited, etc. For the power saving, the possible optimization direction is to simplify the communication process, reduce the number of times the NR-lite user detects downlink control channels, or the like.

In view of the above problems, the disclosure provides a method and an apparatus for transmitting or receiving a system message, and a communication device.

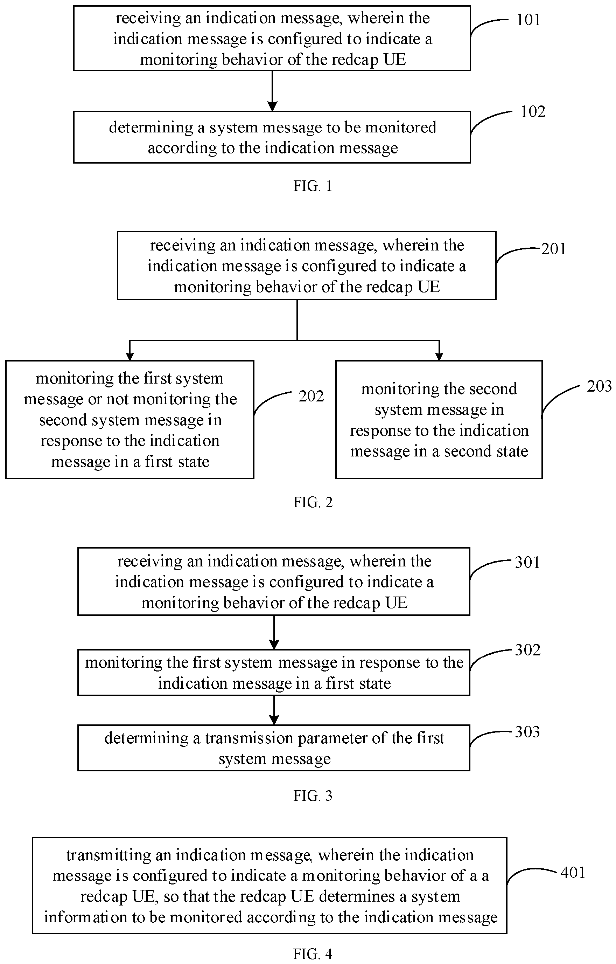

FIG. 1 is a schematic flowchart of a method for transmitting or receiving a system message according to some embodiments of the disclosure. The method for transmitting or receiving a system message may be applicable to a reduced capability user equipment (redcap UE).

As illustrated in FIG. 1, the method for transmitting or receiving a system message may include the following steps.

Step 101, an indication message is received.

The indication message is configured to indicate a monitoring behavior of the redcap UE.

In embodiments of the disclosure, the redcap UE may receive the indication message transmitted by the network side device for indicating the monitoring behavior of the redcap UE.

For example, the indication message may indicate the redcap UE to monitor system message A or not to monitor system message B.

Compared with a non-redcap UE, the redcap UE has advantages such as coverage enhancement and power saving.

Step 102, a system message to be monitored is determined according to the indication message.

In embodiments of the disclosure, after receiving the indication message transmitted by the network side device, the redcap UE may determine the system message to be monitored according to the indication message.

For example, it is assumed that when the indication message is to indicate the redcap UE to monitor system message A and not monitor system message B, the redcap UE may determine to monitor system message A after receiving the indication message.

In the method for transmitting or receiving a system message in embodiments of the disclosure, the redcap UE receives the indication message. The indication message is configured to indicate the monitoring behavior of the redcap UE. The system message to be monitored is determined according to the indication message. Thus, the redcap UE determines the system information to be monitored according to the received indication message, which provides a new method for monitoring a system message, thereby improving the monitoring efficiency of the redcap UE.

It should be noted that the above-mentioned possible implementation manners may be implemented individually or in combination, which is not limited in embodiments of the disclosure.

Another method for transmitting or receiving a system message is provided in embodiments of the disclosure. FIG. 2 is a schematic flowchart of another method for transmitting or receiving a system message according to some embodiments of the disclosure. The method for transmitting or receiving a system message may be applicable to a redcap UE. The method for transmitting or receiving a system message may be executed alone, or may be executed in combination with any embodiment in the disclosure or a possible implementation in any embodiment, or may be executed in combination with any technical solution in the related art.

As illustrated in FIG. 2, the method for transmitting or receiving a system message may include the following steps.

Step 201, an indication message is received. The indication message is configured to indicate a monitoring behavior of the redcap UE.

In embodiments of the disclosure, the redcap UE may receive the indication message transmitted by the network side device for indicating the monitoring behavior of the redcap UE.

As a possible situation of embodiments of the disclosure, the indication message is configured to indicate the redcap UE to monitor a first system message or not to monitor a second system message, in which the first system message corresponds to the redcap UE and the second system message corresponds to a system message defined in an existing system.

For example, the indication message may indicate the redcap UE to monitor a redcap-specific system information block (SIB) or not to monitor an existing remaining minimum system information (RMSI).

As another possible situation of embodiments of the disclosure, the indication message may further include a master information block (MIB), in which the MIB is configured to indicate the monitoring behavior of the redcap UE.

Optionally, spare bit(s) or other reserved bit(s) in the MIB may be used to indicate the monitoring behavior of the redcap UE.

As another possible situation of embodiments of the disclosure, the indication message may further include a physical downlink control channel (PDCCH), in which the PDCCH is configured for the second system message and the PDCCH is configured to indicate the monitoring behavior of the redcap UE.

Optionally, the PDCCH included in the indication message may schedule an RMSI that has been defined in an existing system. Subsequent system message monitoring may be notified by using reserved bit(s) in the PDCCH.

For example, reserved bit(s) in the PDCCH may be used to notify the redcap UE to monitor the second system message.

As another possible situation of embodiments of the disclosure, the indication message may further include a physical downlink shared channel (PDSCH), in which the PDSCH is configured for the second system message and the PDSCH is configured to indicate the monitoring behavior of the redcap UE.

Optionally, the PDSCH included in the indication message may schedule an RMSI that has been defined in an existing system. Subsequent system message monitoring may be notified by using reserved bit(s) in the PDSCH.

For example, reserved bit(s) in the PDSCH may be used to notify the redcap UE to monitor the second system message.

Step 202, it monitors the first system message or does not monitor the second system message in response to the indication message in a first state.

In embodiments of the disclosure, after the redcap UE receives the indication message transmitted by the network side device and determines that the indication message is in the first state, the redcap UE may monitor the first system message or not monitor the second system message.

For example, it is assumed that the indication message is 0. After receiving the indication message, the redcap UE monitors the first system message or does not monitor the second system message.

Step 203, it monitors the second system message in response to the indication message in a second state.

In embodiments of the disclosure, after the redcap UE receives the indication message transmitted by the network side device and determines that the indication message is in the second state, the redcap UE may monitor the second system message.

For example, it is assumed that the indication message is 1. After receiving the indication message, the redcap UE monitors the second system message.

In embodiments of the disclosure, the above step 202 and step 203 are not performed sequentially but the above step 202 and step 203 are determined to be executed according to the state of the indication message.

In the method for transmitting or receiving a system message in embodiments of the disclosure, after receiving the indication message, the redcap UE monitors the first system message or does not monitor the second system message when the indication message is in the first state, and monitor the second system message when the indication message is in the second state. Thus, the redcap UE determines to monitor the first system message or the second system message according to the state of the received indication message, which is beneficial to improving the monitoring efficiency of the redcap UE.

It should be noted that the above-mentioned possible implementation manners may be implemented individually or in combination, which is not limited in embodiments of the disclosure.

Another method for transmitting or receiving a system message is provided in embodiments of the disclosure. FIG. 3 is a schematic flowchart of another method for transmitting or receiving a system message according to some embodiments of the disclosure. The method for transmitting or receiving a system message may be applicable to a redcap UE. The method for transmitting or receiving a system message may be executed alone, or may be executed in combination with any embodiment in the disclosure or a possible implementation in any embodiment, or may be executed in combination with any technical solution in the related art.

As illustrated in FIG. 3, the method for transmitting or receiving a system message may include the following steps.

Step 301, an indication message is received. The indication message is configured to indicate a monitoring behavior of the redcap UE.

Step 302, it monitors the first system message in response to the indication message in a first state.

In embodiments of the disclosure, for the implementation process of step 301 and step 302, reference may be made to the implementation process of step 201 and step 202 in the above-mentioned embodiments and details are not repeated herein.

Step 303, a transmission parameter of the first system message is determined.

In embodiments of the disclosure, after receiving the indication message transmitted by the network side device, the redcap UE determines that the indication message is in the first state, monitors the first system message and further determines the transmission parameter of the first system message.

Optionally, the transmission parameter of the first system message may include a parameter of a bandwidth part (BWP) where the first system message is located; a set parameter of a control resource set (CORESET) for scheduling the first system message; or a set parameter of a PDSCH for scheduling the first system message.

In a possible situation of embodiments of the disclosure, at least some of the following transmission parameters of the first system message is the same as corresponding transmission parameters of the second system message: a bandwidth; a sub-carrier spacing (SCS); or a modulation and coding scheme (MCS).

The rate configuration in the LTE is realized through an MCS index value. The concerned factors affecting the communication rate may be taken as a column of the table and MCS indices may be taken as a row of the table to form the rate table. Therefore, each MCS index actually corresponds to the physical transmission rate under a set of parameters.

As a possible implementation of embodiments of the disclosure, when determining the transmission parameter of the first system message, the transmission parameter of the first system message may be determined based on a predefined rule. For example, it is predefined that the bandwidth of the first system message is the same as the bandwidth of the second system message, the first system message and the second system message have the same SCS, or the first system message and the second system message have the same MCS.

For example, it is predefined that the BWP of transmitting or receiving the redcap-SIB has the same bandwidth or the same SCS as the initial BWP of the non-redcap UE, or the RMSI of the redcap-SIB and the RMSI of the non-redcap UE have the same MCS.

As a possible implementation of embodiments of the disclosure, when determining the transmission parameter of the first system message, the transmission parameter may also be determined based on the PDCCH.

As a possible implementation of embodiments of the disclosure, when determining the transmission parameter of the first system message, the transmission parameter may also be determined based on the PDSCH.

As a possible implementation of embodiments of the disclosure, when determining the transmission parameter of the first system message, the transmission parameter may also be determined based on the PDCCH and the PDSCH.

Optionally, the PDCCH and/or the PDSCH may include the specific configuration of the transmission parameter. Therefore, the transmission parameter of the first system message may be determined based on the PDCCH and/or PDSCH. In the embodiments of the disclosure, the PDCCH may be a PDCCH shared by the redcap UE and the non-redcap UE or a PDCCH dedicated to the redcap UE.

For example, the PDCCH may include a PDCCH for scheduling the RMSI of the non-redcap UE or a PDCCH dedicated to the redcap UE.

In the method for transmitting or receiving a system message in embodiments of the disclosure, after receiving the indication message, the redcap UE monitors the first system message in response to the indication message in the first state and determines the transmission parameter of the first system message. Therefore, based on the state of the received indication message, the redcap UE determines to monitor the first system message and determines the transmission parameter of the first system message, thereby improving the monitoring efficiency of the redcap UE.

It should be noted that the above-mentioned possible implementation manners may be implemented individually or in combination, which is not limited in embodiments of the disclosure.

Another method for transmitting or receiving a system message is provided in embodiments of the disclosure. FIG. 4 is a schematic flowchart of another method for transmitting or receiving a system message according to some embodiments of the disclosure. The method for transmitting or receiving a system message may be applicable to a network side device. The method for transmitting or receiving a system message may be executed alone, or may be executed in combination with any embodiment in the disclosure or a possible implementation in any embodiment, or may be executed in combination with any technical solution in the related art.

As illustrated in FIG. 4, the method for transmitting or receiving a system message may include the following step.

Step 401, an indication message is transmitted, in which the indication message is configured to indicate a monitoring behavior of a redcap UE, so that the redcap UE determines a system information to be monitored according to the indication message.

The network side device takes a base station as an example. The base station may include a plurality of cells for serving terminal devices. Depending on the specific application, each cell may include a plurality of transmitting receiving points (TRPs) or may be a device in the access network that communicates with wireless terminal devices through one or more sectors in NR, or other name. For example, the base station involved in some embodiments of the disclosure may be a base transceiver station (BTS) in a global system for mobile communication (GSM) or in code division multiple access (CDMA), a base station (NodeB) in wide-band code division multiple access (WCDMA), an evolutional Node B (eNB or e-NodeB) in a long term evolution (LTE) system, a 5G base station (gNB) in 5G network architecture (next generation system), a home evolved Node B (HeNB), a relay node, a home base station (femto), a pico base station (pico), or the like, which are not limited in some embodiments of the disclosure.

In the embodiments of the disclosure, the network side device transmits the indication message to the redcap UE, and after receiving the indication message, the redcap UE determines the system message to be monitored according to the monitoring behavior indicated by the indication message.

In the embodiments of the disclosure, the indication message is configured to indicate the redcap UE to monitor a first system message or not to monitor a second system message, in which the first system message corresponds to the redcap UE and the second system message corresponds to a system message defined in an existing system.

Optionally, the first system message may be a redcap-specific SIB and the second system message may be an existing RMSI.

As another possible situation of embodiments of the disclosure, the indication message may further include an MIB, in which the MIB is configured to indicate the monitoring behavior of the redcap UE.

Optionally, spare bit(s) or other reserved bit(s) in the MIB may be used to indicate the monitoring behavior of the redcap UE.

As another possible situation of embodiments of the disclosure, the indication message may further include a PDCCH, in which the PDCCH is configured for the second system message and the PDCCH is configured to indicate the monitoring behavior of the redcap UE.

Optionally, the PDCCH included in the indication message may schedule an RMSI that has been defined in an existing system. Subsequent system message monitoring may be notified by using reserved bit(s) in the PDCCH.

For example, reserved bit(s) in the PDCCH may be used to notify the redcap UE to monitor the second system message.

As another possible situation of embodiments of the disclosure, the indication message may further include a PDSCH, in which the PDSCH is configured for the second system message and the PDSCH is configured to indicate the monitoring behavior of the redcap UE.

Optionally, the PDSCH included in the indication message may schedule an RMSI that has been defined in an existing system. Subsequent system message monitoring may be notified by using reserved bit(s) in the PDSCH.

For example, reserved bit(s) in the PDSCH may be used to notify the redcap UE to monitor the second system message.

In a possible situation of embodiments of the disclosure, the indication message transmitted by the network side device to the redcap UE is in the first state, and after receiving the indication message, the redcap UE determines that the indication message is in the first state, and monitoring the first system message is performed or the second system message is not monitored.

For example, it is assumed that the indication message is 0. After receiving the indication message, the redcap UE monitors the first system message or does not monitor the second system message.

In a possible situation of embodiments of the disclosure, the indication message transmitted by the network side device to the redcap UE is in the second state, and after receiving the indication message, the redcap UE determines that the indication message is in the second state, and monitoring the second system message is performed.

For example, it is assumed that the indication message is 1. After receiving the indication message, the redcap UE monitors the second system message.

In a possible situation of embodiments of the disclosure, the network side device transmits the indication message to the redcap UE, and after receiving the indication message transmitted by the network side device, the redcap UE determines that the indication message is in the first state, and monitoring the first system message is performed, and further the transmission parameter of the first system message is determined.

Optionally, the transmission parameter of the first system message may include a parameter of a BWP where the first system message is located; a set parameter of a CORESET for scheduling the first system message; or a set parameter of a PDSCH for scheduling the first system message.

In a possible situation of embodiments of the disclosure, at least some of the following transmission parameters of the first system message is the same as corresponding transmission parameters of the second system message: a bandwidth; an SCS; or an MCS.

The rate configuration in the LTE is realized through an MCS index value. The concerned factors affecting the communication rate may be taken as a column of the table and MCS indices may be taken as a row of the table to form the rate table. Therefore, each MCS index actually corresponds to the physical transmission rate under a set of parameters.

As a possible implementation of embodiments of the disclosure, when determining the transmission parameter of the first system message, the transmission parameter of the first system message may be determined based on a predefined rule. For example, it is predefined that the bandwidth of the first system message is the same as the bandwidth of the second system message, the first system message and the second system message have the same SCS, or the first system message and the second system message have the same MCS.

For example, it is predefined that the BWP of transmitting or receiving the redcap-SIB has the same bandwidth or the same SCS as the initial BWP of the non-redcap UE, or the RMSI of the redcap-SIB and the RMSI of the non-redcap UE have the same MCS.

As a possible implementation of embodiments of the disclosure, when determining the transmission parameter of the first system message, the transmission parameter may also be determined based on the PDCCH or the PDSCH.

Optionally, the PDCCH and/or the PDSCH include the specific configuration of the transmission parameter. Therefore, the transmission parameter of the first system message may be determined based on the PDCCH and/or PDSCH.

In the embodiments of the disclosure, the PDCCH may be a PDCCH shared by the redcap UE and the non-redcap UE or a PDCCH dedicated to the redcap UE.

For example, the PDCCH may include a PDCCH for scheduling the RMSI of the non-redcap UE or a PDCCH dedicated to the redcap UE.

In the method for transmitting or receiving a system message in embodiments of the disclosure, the network side device transmits the indication message, in which the indication message is configured to indicate the monitoring behavior of the redcap UE, so that the redcap UE determines the system message to be monitored according to the indication message, which is beneficial to improve the monitoring efficiency performance of the redcap UE.

It should be noted that the above-mentioned possible implementation manners may be implemented individually or in combination, which is not limited in embodiments of the disclosure.

Corresponding to the method for transmitting or receiving a system message provided in the above-mentioned embodiments in FIGS. 1 to 3, the disclosure also provides an apparatus for transmitting or receiving a system message. Since the apparatus for transmitting or receiving a system message provided in embodiments of the disclosure corresponds to the method for transmitting or receiving a system message provided in the above-mentioned embodiments in FIGS. 1 to 3, the implementation of the method for transmitting or receiving a system message is also applicable to the apparatus for transmitting or receiving a system message provided in the embodiments of the disclosure, which will not be described in detail in the embodiments of the disclosure.

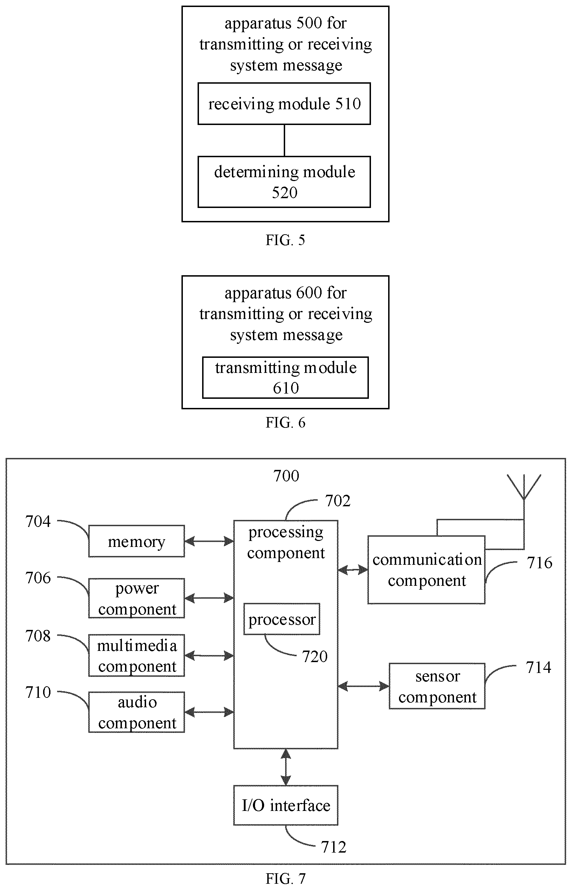

FIG. 5 is a schematic block diagram of an apparatus for transmitting or receiving a system message according to some embodiments of the disclosure. The apparatus may be applied in a redcap UE.

As illustrated in FIG. 5, the apparatus 500 for transmitting or receiving a system message may include a receiving module 510 and a determining module 520.

The receiving module 510 is configured to receive an indication message, in which the indication message is configured to indicate a monitoring behavior of the redcap UE.

The determining module 520 is configured to determine a system message to be monitored according to the indication message.

Optionally, the indication message is configured to indicate the redcap UE to monitor a first system message or not to monitor a second system message, in which the first system message corresponds to the redcap UE and the second system message corresponds to a system message defined in an existing system.

Optionally, the determining module 520 may also be configured to: monitor the first system message or not monitor the second system message in response to the indication message in a first state; or monitor the second system message in response to the indication message in a second state.

Optionally, the indication message includes an MIB and the MIB is configured to indicate the monitoring behavior of the redcap UE.

Optionally, the indication message includes a PDCCH, in which the PDCCH is configured for the second system message and the PDCCH is configured to indicate the monitoring behavior of the redcap UE.

Optionally, the indication message includes a PDSCH, in which the PDSCH is configured for the second system message and the PDSCH is configured to indicate the monitoring behavior of the redcap UE.

Optionally, when monitoring the first system message, the apparatus 500 may further include: a determining module, configured to determine a transmission parameter of the first system message.

Optionally, the transmission parameter includes at least one of: a parameter of a BWP where the first system message is located; a set parameter of a CORESET for scheduling the first system message; or a set parameter of a PDSCH for scheduling the first system message.

Optionally, the determining module is further configured for at least some of the following transmission parameters of the first system message being the same as corresponding transmission parameters of the second system message: a bandwidth; an SCS; or an MCS.

Optionally, the determining module is further configured to determine the transmission parameter according to a PDCCH and/or a PDSCH, in which the PDCCH and/or the PDSCH includes a specific configuration of the transmission parameter.

Optionally, the PDCCH is a PDCCH shared by the redcap UE and a non-redcap UE or a PDCCH dedicated to the redcap UE.

In the apparatus for transmitting or receiving a system message in embodiments of the disclosure, the redcap UE receives the indication message. The indication message is configured to indicate the monitoring behavior of the redcap UE. The system message to be monitored is determined according to the indication message. Thus, the redcap UE determines the system information to be monitored according to the received indication message, thereby improving the monitoring efficiency of the redcap UE.

It should be noted that the above-mentioned possible implementation manners may be implemented individually or in combination, which is not limited in embodiments of the disclosure.

Corresponding to the method for transmitting or receiving a system message provided in the above-mentioned embodiments in FIG. 4, the disclosure also provides an apparatus for transmitting or receiving a system message. Since the apparatus for transmitting or receiving a system message provided in embodiments of the disclosure corresponds to the method for transmitting or receiving a system message provided in the above-mentioned embodiments in FIG. 4, the implementation of the method for transmitting or receiving a system message is also applicable to the apparatus for transmitting or receiving a system message provided in the embodiments of the disclosure, which will not be described in detail in the embodiments of the disclosure.

FIG. 6 is a schematic block diagram of another apparatus for transmitting or receiving a system message according to some embodiments of the disclosure. The apparatus may be applied in a network side device.

As illustrated in FIG. 6, the apparatus 600 for transmitting or receiving a system message may include a transmitting module 610.

The transmitting module 610 is configured to transmit an indication message, in which the indication message is configured to indicate a monitoring behavior of a redcap UE, so that the redcap UE determines a system information to be monitored according to the indication message.

Optionally, the indication message is configured to indicate the redcap UE to monitor a first system message or not to monitor a second system message, in which the first system message corresponds to the redcap UE and the second system message corresponds to a system message defined in an existing system.

In the apparatus for transmitting or receiving a system message in embodiments of the disclosure, the network side device transmits the indication message, in which the indication message is configured to indicate the monitoring behavior of the redcap UE, so that the redcap UE determines the system message to be monitored according to the indication message, which is beneficial to improve the monitoring efficiency performance of the redcap UE.

It should be noted that the above-mentioned possible implementation manners may be implemented individually or in combination, which is not limited in embodiments of the disclosure.

In order to realize the above embodiments, the disclosure also proposes a communication device.

The communication device provided in some embodiments of the disclosure includes a processor, a transceiver, a memory, and an executable program stored in the memory and capable of being executed by the processor. When the processor runs the executable program, the above-mentioned method for transmitting or receiving a system message is executed.

The communication device may be the above-mentioned terminal device, access network device, or core network device.

The processor may include various types of storage media, which are non-transitory computer storage media that may continue to memorize and store information on the communication device after the power is turned off. Herein, the communication device includes the terminal device, the access network device, or the core network device.

The processor may be connected to the memory through a bus or the like, for reading the executable program stored on the memory, such as at least one of FIG. 1 to FIG. 4.

In order to realize the above embodiments, the disclosure also proposes a computer storage medium.

The computer storage medium provided in some embodiments of the disclosure stores an executable program; after the executable program is executed by a processor, the method for transmitting or receiving a system message is performed, for example, at least as illustrated in FIG. 1 to FIG. 4.

In order to realize the above embodiments, the disclosure also proposes a computer program product.

The computer program product provided in embodiments of the disclosure includes a computer program, and when the computer program is executed by a processor, the method for transmitting or receiving a system message is performed, for example, at least as illustrated in FIG. 1 to FIG. 4.

FIG. 7 is a block diagram of a user equipment (UE) according to some embodiments of the disclosure. For example, the UE 700 may be a mobile phone, a computer, a digital broadcast terminal, a messaging device, a gaming console, a tablet, a medical device, exercise equipment, a personal digital assistant, and the like.

Referring to FIG. 7, the UE 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the UE 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the UE 700. Examples of such data include instructions for any applications or methods operated on the UE 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the UE 700. The power component 706 may include a power management system, one or more power sources, and any other components associated with the generation, management, and distribution of power in the UE 700.

The multimedia component 708 includes a screen providing an output interface between the UE 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the UE 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the UE 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the UE 700. For instance, the sensor component 714 may detect an open/closed status of the UE 700, relative positioning of components, e.g., the display and the keypad, of the UE 700, a change in position of the UE 700 or a component of the UE 700, a presence or absence of user contact with the UE 700, an orientation or an acceleration/deceleration of the UE 700, and a change in temperature of the UE 700. The sensor component 714 may include a proximity sensor configured to detect the presence of nearby objects without any physical contact. The sensor component 714 may also include a light sensor, such as a CMOS or CCD image sensor, for use in imaging disclosures. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the UE 700 and other devices. The UE 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the UE 700 may be implemented with one or more disclosure specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods in the embodiments of FIG. 1 to FIG. 3.

In some embodiments, there is also provided a non-transitory computer-readable storage medium including instructions, such as included in the memory 704, executable by the processor 720 in the UE 700, for performing the above-described methods. For example, the non-transitory computer-readable storage medium may be a ROM, a RAM, a CD-ROM, a magnetic tape, a floppy disc, an optical data storage device, and the like.

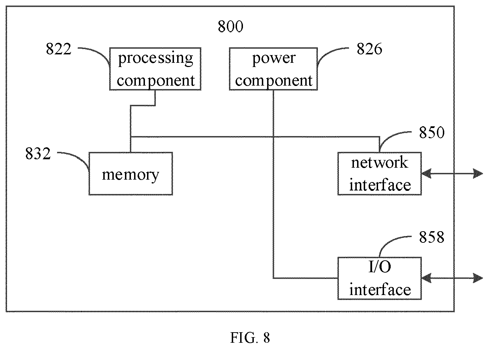

As illustrated in FIG. 8, it is a schematic block diagram of a network side device according to some embodiments of the disclosure. Referring to FIG. 8, the network side device 800 includes a processing component 822, which further includes at least one processor, and a memory resource, represented by a memory 832, for storing instructions executable by the processing component 822, such as an application program. The application program stored in the memory 832 may include one or more modules, in which each corresponding to a set of instructions. Furthermore, the processing component 922 is configured to execute instructions to perform any of the aforementioned methods applicable to the base station, e.g., the methods illustrated in FIG. 4.

The network side device 800 may also include a power component 826 configured to perform power management of the network side device 800, a wired or wireless network interface 850 configured to connect the network side device 800 to a network, and an I/O interface 858. The network side device 800 may operate based on an operating system stored in the memory 832, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed herein. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for transmitting or receiving a system message, applicable to a reduced capability user equipment (redcap UE), comprising:
receiving an indication message, wherein the indication message is configured to indicate a monitoring behavior of the redcap UE; and
determining a system message to be monitored according to the indication message.

2. The method according to claim 1, wherein the indication message is configured to indicate the redcap UE to monitor a first system message or not to monitor a second system message, in which the first system message corresponds to the redcap UE and the second system message corresponds to a system message defined in an existing system.

3. The method according to claim 2, wherein determining the system message to be monitored according to the indication message comprises:
monitoring the first system message or not monitoring the second system message in response to the indication message in a first state; or
monitoring the second system message in response to the indication message in a second state.

4. The method according to any one of claims 1-3, wherein the indication message comprises a master information block (MIB) and the MIB is configured to indicate the monitoring behavior of the redcap UE.

5. The method according to any one of claims 1-3, wherein the indication message comprises a physical downlink control channel (PDCCH), in which the PDCCH is configured for the second system message and the PDCCH is configured to indicate the monitoring behavior of the redcap UE.

6. The method according to any one of claims 1-3, wherein the indication message comprises a physical downlink shared channel (PDSCH), in which the PDSCH is configured for the second system message and the PDSCH is configured to indicate the monitoring behavior of the redcap UE.

7. The method according to any one of claims 1-6, wherein when monitoring the first system message, the method further comprises:
determining a transmission parameter of the first system message.

8. The method according to claim 7, wherein the transmission parameter comprises at least one of:
a parameter of a bandwidth part (BWP) where the first system message is located;
a set parameter of a control resource set (CORESET) for scheduling the first system message; or
a set parameter of a physical downlink shared channel (PDSCH) for scheduling the first system message.

9. The method according to claim 7, wherein determining the transmission parameter of the first system message comprises:
at least some of the following transmission parameters of the first system message being the same as corresponding transmission parameters of the second system message:
a bandwidth;
a sub-carrier spacing (SCS); or
a modulation and coding scheme (MCS).

10. The method according to claim 7, wherein determining the transmission parameter of the first system message comprises:
determining the transmission parameter according to a physical downlink control channel (PDCCH) and/or a physical downlink shared channel (PDSCH), wherein the PDCCH and/or the PDSCH comprises a specific configuration of the transmission parameter.

11. The method according to claim 10, wherein the PDCCH is a PDCCH shared by the redcap UE and a non-redcap UE or a PDCCH dedicated to the redcap UE.

12. A method for transmitting or receiving a system message, applicable to a base station, comprising:
transmitting an indication message, wherein the indication message is configured to indicate a monitoring behavior of a reduced capability user equipment (redcap UE), so that the redcap UE determines a system information to be monitored according to the indication message.

13. The method according to claim 12, wherein the indication message is configured to indicate the redcap UE to monitor a first system message or not to monitor a second system message, in which the first system message corresponds to the redcap UE and the second system message corresponds to a system message defined in an existing system.

14. An apparatus for transmitting or receiving a system message, applicable to a reduced capability user equipment (redcap UE), comprising:
a receiving module, configured to receive an indication message, wherein the indication message is configured to indicate a monitoring behavior of the redcap UE; and
a determining module, configured to determine a system message to be monitored according to the indication message.

15. An apparatus for transmitting or receiving a system message, applicable to a base station, comprising:
a transmitting module, configured to transmit an indication message, wherein the indication message is configured to indicate a monitoring behavior of a reduced capability user equipment (redcap UE), so that the redcap UE determines a system information to be monitored according to the indication message.

16. A communication device, comprising: a transceiver; a memory; and a processor, connected to the transceiver and the memory respectively and configured to, by executing computer-executable instructions on the memory, control wireless signal transceiving of the transceiver and realize the method according to any one of claims 1 to 11 or 12 to 13.

17. A computer storage medium, wherein the computer storage medium stores computer-executable instructions; and when the computer-executable instructions are executed by a processor, the method according to any one of claims 1 to 11 or 12 to 13 is realized.
